## Europäisches Patentamt
## European Patent Office
## Office européen des brevets

(19)

(11) Publication number: **0 040 446**
**B1**

(12) **EUROPEAN PATENT SPECIFICATION**

(45) Date of publication of patent specification: **30.11.83**

(51) Int. Cl.³: **B 29 B 1/02**

(21) Application number: **81200482.8**

(22) Date of filing: **07.05.81**

(54) Process and device for making granules consisting of filled plastic.

(30) Priority: **16.05.80 NL 8002835**

(43) Date of publication of application:
**25.11.81 Bulletin 81/47**

(45) Publication of the grant of the patent:
**30.11.83 Bulletin 83/48**

(84) Designated Contracting States:
**AT BE DE FR GB IT NL SE**

(56) References cited:
**DE - B - 1 800 226**
**GB - A - 1 358 987**
**US - A - 2 350 632**
**US - A - 2 764 779**
**US - A - 3 155 750**
**US - A - 3 676 249**

(73) Proprietor: **STAMICARBON B.V.**
**Postbus 10**
**NL-6160 MC Geleen (NL)**

(72) Inventor: **Leyen, Johannes Jacobus Petrus**
**Kastanjelaan 5**
**NL-6131 KA Sittard (NL)**

(74) Representative: **Hoogstraten, Willem Cornelis**
**Roeland et al,**
**OCTROOIBUREAU DSM Postbus 9**
**NL-6160 MA Geleen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Process and device for making granules consisting of filled plastic

The invention relates to a process for making plastic granules in which fillers are distributed.

For making plastic granules in which fillers are distributed it is known to process the plastic and the filler in an extruder with a granulating head. This process is energetically expensive and, if hard fillers are used, involves a considerable wear of the extruder parts.

For the manufacturer of objects consisting of filled plastics it is an advantage to start from a plastic granulate in which the filler is already distributed in the plastic. The processing machine, for instance an extruder, will then be less liable to wear.

It is the task of the plastics supplier to make low-cost filled plastic granules, which requires, among other things, minimum energy consumption and limitation of the wear of the equipment to be used.

The purpose of the invention is to provide a process for making plastic granules in which fillers are distributed, which process meets the requirements made.

According to the invention this is obtained by feeding the filler to the surface of plastic web and pressing it down herein while the plastic is in a softened state and by subsequently cooling the web and processing it to granules by means of a dicing device.

From GB—A—1358987 a method is known in which particulate material is partially embedded to one or both surfaces of an undrawn film. The particles favourize fibrillation of the film and provide the surface of a drawn film or the fibrous product with useful properties. US—A—3.676.249 describes a method for the manufacture of a reinforced crosslinked resin sheet in which reinforced material is pressed into one, or is compressed between two layers of polymeric material and irradiating this intermediate product. However the methods described in these patent specifications are not related to the manufacture of granules consisting of filled plastic.

The filler can be pressed down into the plastic between a hard base and a pressure roll or between two pressure rolls.

It is an advantage to apply the filler between two plastic webs, because the filler will then sooner be fully surrounded by plastic. While the plastic webs, in softened state, are pressed down, they will be bonded together and can, as one web, be processed to granules.

According to an embodiment of the process according to the invention, the plastic is brought to a softened state before supplying the filler. The process, therefore, is particularly suitable in those cases in which, in consequence of a prior process, such as extrusion or calendering, the plastic is available in already softened state. The plastic may, however, also be heated in a different manner to such a degree as to be soft enough for the filler to be pressed into it.

Heating of the web surfaces which the filler will be pressed into may already suffice. This heating can be achieved with heating rolls or infrared radiation. In this process it is not necessary for the plastic to be softened throughout. From an energy point of view it is advantageous to only soften the surface.

The plastic can be softened also after the supply of the filler. According to a suitable embodiment, the heat required for this purpose is supplied in this process via the filler, which, to this end, has been brought to a sufficiently high temperature before being fed to the plastic web.

The filler can be supplied in the form of threads, fibres, powder or grains. Particularly filler supplied in the form of threads permits of a very regular distribution in the plastic.

The process is, therefore, particularly suitable for filling plastic with glass fibres. In this process the filler is fed to the plastic web in the form of glass threads. Not only can in this process the dosage be controlled in an extremely simple manner, but the dicing applied according to the invention offers the advantage that the glass fibres are present in the plastic according to a regular distribution of length.

The device for carrying out the method according to the invention is characterized by the presence of means for the supply of plastic web and filler, of means for heating the plastic and/or the filler, of means for pressing the filler into the plastic web, means for cooling the web provided with filler, and, of means for carrying off the plastic web provided with filler and feeding it to a dicing device also present.

The means for pressing the filler into the plastic may consist of a pressure base with pressure roll or of two pressure rolls rotatable in opposite directions.

The pressure rolls may have a profiled surface.

The method according to the invention will hereinafter be elucidated by means of an example of an embodiment of the device according to the invention shown in the drawing.

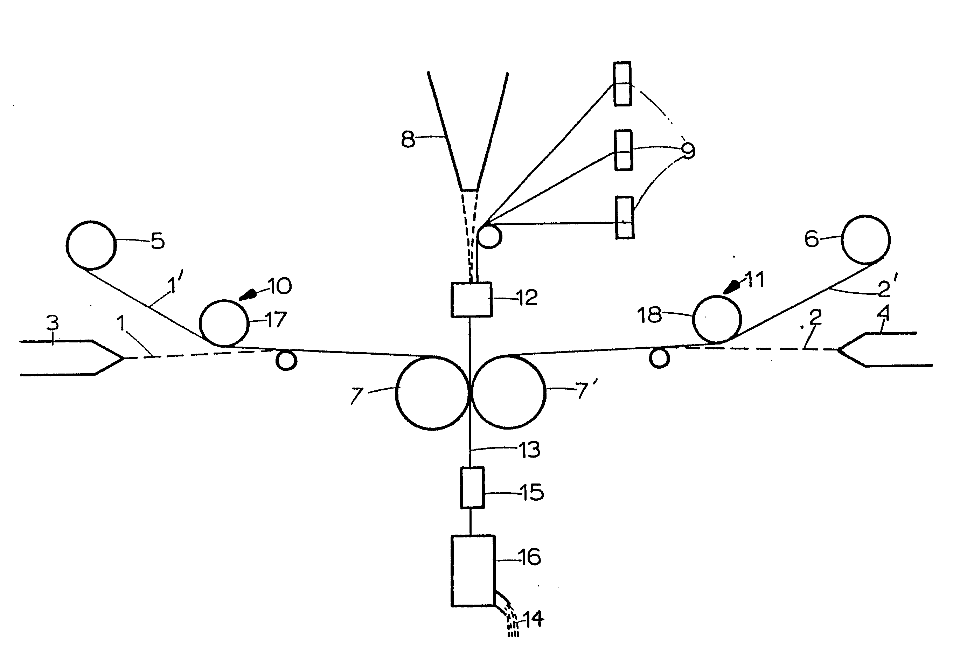

In the drawing 1, 2 and 1', 2' indicate plastic webs coming from respectively two slot die extruders 3 and 4 or from supply rolls 5 and 6. The webs 1 and 2 or 1' and 2' are brought between pressure rolls 7 and 7'.

Filler in the form of powder, grains or fibres coming from a hopper 8 or in the form of threads coming from a number of bobbins 9, the number of which can be chosen as one thinks fit, is fed to the surface of the plastic web in the nip of rolls 7 and 7'.

If the plastic web is obtained direct from the extruder, the supply of heat to the plastic to soften it can be effected by the extruder itself. If the plastic webs come from supply rolls, the heat can be supplied by heating devices 10 and 11. The heat may also be supplied by heating the filler by means of a heating device 12. Once in contact with the surfaces of the plastic webs, the heated filler will transfer the heat to the plastic, which will then become soft.

The filler is pressed into the plastic because the distance between rolls 7 and 7' is equal to or smaller than the total thickness of the plastic webs supplied.

The surfaces of rolls 7 and 7' may be profiled somewhat, with raised parts on one roll fitting in hollows in the other roll.

After the filler has been pressed into the plastic, in which process the plastic webs are more or less bonded together, the plastic will now be fed as one filled plastic web 13 to a dicer 16, optionally via a cooling device 15, and be processed to granules 14.

The heating devices 10 and 11 may consist of rolls 17 and 18 heated with steam or electricity. Infrared heaters may also be used. Heating device 12 may also be an infrared heater.

The device can also be operated in such a manner that the heat required for the softening of the plastic is supplied by a combination of the said sources of heat.

The filler is supplied in a manner as to be evenly fed over the full width of the plastic webs.

If the plastic of the webs is in a completely softened state, it is an advantae, for the purpose of obtaining a proper mixture, to allow an accumulation of material, also called 'bank', to develop in the nip of the pressure rolls.

## Claims

1. Process for making plastic granules (14) in which fillers are distributed, characterized in that the filler is fed to the surface of plastic web (1, 1', 2, 2') and is pressed down therein while the plastic is in a softened state and the plastic web (13) is subsequently cooled and is processed to granules by means of a dicing device (16).

2. Process according to claim 1, characterized in that the filler is brought between two plastic webs (1, 1', 2, 2').

3. Process according to claim 1 or 2, characterized in that, before the supply of the filler, the plastic is in a softened state.

4. Process according to any one of the claims 1 or 2, characterized in that, after the supply of the filler, the plastic is brought into a softened state.

5. Process according to claim 4, characterized in that, before its supply, the filler is brought to such a temperature that it is capable of bringing the plastic into a softened state before and/or during the pressing down.

6. Process according to claim 3 or 4, characterized in that the plastic is brought into a softened state by means of infrared radiation on the side where the filler will be supplied.

7. Process according to any one of the claims 1 up to and including 6, characterized in that the filler is supplied in the form of threads or fibres.

8. Process according to any one of the claims 1 up to and including 6, characterized in that the filler is supplied in the form of powder or grains.

9. Process according to any one of the claims 1 up to and including 6, characterized in that, as filler, glass is used, which is supplied in the form of threads.

10. Process according to any one of the claims 1 up to and including 9, characterized in that the completely softened plastic, together with the filler, is allowed to accumulate before the filler is pressed into the plastic.

11. Device for carrying out the process according to any one of the claims 1 up to and including 10, characterized in that there are provided means (3, 4, 5, 6, 8, 9) for the supply of plastic web (1, 1', 2, 2') and filler, means (10, 11, 12) for heating the plastic web (1', 2') and/or the filler, means (7, 7') for pressing the filler into the plastic web, means (15) for cooling down the web (13) provided with filler and means for carrying off the plastic web provided with filler and feeding it to a dicing device (16) also present.

12. Device according to claim 11, characterized in that the means for pressing the filler into the plastic is formed by a pressure base with a pressure roll or by two pressure rolls (7, 7') rotating in opposite directions.

13. Device according to claim 12, characterized in that the surfaces of the pressure rolls (7, 7') are profiled.

## Patentansprüche

1. Verfahren zur Erzeugung von Kunststoffkörnern (14), in denen Füllstoffe verteilt sind, dadurch gekennzeichnet, daß der Füllstoff der Oberfläche einer Kunststoffbahn (1, 1', 2, 2') zugeführt und in dieselbe hineingepreßt wird, während sich der Kunststoff in erweichtem Zustand befindet, und die Kunststoffbahn (13) anschließend abgekühlt und mittels einer Zerkleinerungsvorrichtung (16) zu Körnern verarbeitet wird.

2. Verfahren nach Anspruch 1, dadurch gekennzeichnet, daß der Füllstoff zwischen zwei Kunststoffbahnen (1, 1', 2, 2') gebracht wird.

3. Verfahren nach Anspruch 1 oder 2, dadurch gekennzeichnet, daß sich der Kunststoff vor der Zuführung des Füllstoffes in einem erweichten Zustand befindet.

4. Verfahren nach Anspruch 1 oder 2, dadurch gekennzeichnet, daß der Kunststoff nach der Zuführung des Füllstoffes in einen erweichten Zustand gebracht wird.

5. Verfahren nach Anspruch 4, dadurch gekennzeichnet, daß der Füllstoff, bevor er zugeführt wird, auf eine solche Temperatur gebracht wird, daß er imstande ist, den Kunststoff vor oder während des Hineinpressens in einen erweichten Zustand zu versetzen.

6. Verfahren nach Anspruch 3 oder 4, dadurch gekennzeichnet, daß der Kunststoff mittels Infrarotbestrahlung auf jener Seite, auf die der Füllstoff aufgebracht werden soll, in einen erweichten Zustand gebracht wird.

7. Verfahren nach einem der Ansprüche 1 bis 6, dadurch gekennzeichnet, daß der Füllstoff in Form von Fäden oder Fasern zugeführt wird.

8. Verfahren nach einem der Ansprüche 1 bis 6, dadurch gekennzeichnet, daß der Füllstoff in Form von Pulver oder Körnern zugeführt wird.

9. Verfahren nach einem der Ansprüche 1 bis 6, dadurch gekennzeichnet, daß als Füllstoff Glas verwendet wird, das in Form von Fäden zugeführt wird.

10. Verfahren nach einem der Ansprüche 1 bis 9, dadurch gekennzeichnet, daß sich der vollständig erweichte Kunststoff zusammen mit dem Füllstoff ansammeln gelassen wird, bevor der Füllstoff in den Kunststoff hineingepreßt wird.

11. Vorrichtung zur Durchführung des Verfahrens gemäß einem der Ansprüche 1 bis 10, gekennzeichnet durch Einrichtungen (3, 4, 5, 6, 8, 9) zum Zuführen von Kunststoffbahn (1, 1', 2, 2') und Füllstoff, Einrichtungen (10, 11, 12) zum Erhitzen der Kunststoffbahn (1', 2') und/oder des Füllstoffes, eine Einrichtung (7, 7') zum Einpressen des Füllstoffes in die Kunststoffbahn, eine Einrichtung (15) zum Abkühlen der mit Füllstoff versehenen Kunststoffbahn (13) und einer Einrichtung zum Abführen der mit Füllstoff versehenen Kunststoffbahn und Zuführen derselben zu einer gleichfalls anwesenden Zerkleinerungsvorrichtung (16).

12. Vorrichtung nach Anspruch 11, dadurch gekennzeichnet, daß die Einrichtung zum Einpressen des Füllstoffes in den Kunststoff durch eine Preßunterlage mit einer Preßwalze oder durch zwei in entgegengesetzten Richtungen drehbaren Preßwalzen (7, 7') gebildet wird.

13. Vorrichtung nach Anspruch 12, dadurch gekennzeichnet, daß die Oberflächen der Preßwalzen (7, 7') profiliert sind.

**Revendications**

1. Procédé de fabrication de granules de matière plastique (14) dans lesquels des charges sont distribuées, caractérisé en ce que la charge est amenée à la surface d'une feuille de matière plastique (1, 1', 2, 2') et pressée dedans vers le bas alors que la matière plastique se trouve à l'état ramolli et que la feuille plastique (13) est ensuite refroidie et transformée en granules à l'aide d'un dispositif de granulation (16).

2. Procédé selon la revendication 1, caractérisé en ce que la charge est appliquée entre deux feuilles de matière plastique (1, 1', 2, 2').

3. Procédé selon l'une des revendications 1 et 2, caractérisé en ce que la matière plastique se trouve à l'état ramolli avant que la charge soit appliquée.

4. Procédé selon l'une des revendications 1 et 2, caractérisé en ce que la matière plastique est mise à l'état ramolli après que la charge a été appliquée.

5. Procédé selon la revendication 4, caractérisé en ce que la charge, avant qu'elle soit appliquée, est portée à une température telle qu'elle soit en état de mettre la matière plastique à l'état ramolli avant et/ou pendant la pression vers le bas.

6. Procédé selon l'une des revendications 3 et 4, caractérisé en ce que la matière plastique est mise à l'état ramolli à l'aide d'un rayonnement infrarouge du côté où la charge sera appliquée.

7. Procédé selon l'une des revendications 1 à 6, caractérisé en ce que la charge est appliquée sous forme de fils ou de fibres.

8. Procédé selon l'une des revendications 1 à 6, caractérisé en ce que la charge est appliquée sous forme de poudre ou de grains.

9. Procédé selon l'une des revendications 1 à 6, caractérisé en ce qu'on utilise, comme charge, du verre qui est appliqué sous forme de fils.

10. Procédé selon l'une des revendications 1 à 9, caractérisé en ce qu'on fait accumuler la quantité totale de la matière plastique ramollie, ensemble avec la charge, avant que celle-ci soit pressée dans la matière plastique.

11. Dispositif pour la mise en oeuvre du procédé selon l'une des revendications 1 à 10, caractérisé en ce qu'il comporte des moyens (3, 4, 5, 6, 8, 9) pour amener la feuille de matière plastique (1, 1', 2, 2') et la charge, des moyens (10, 11, 12) pour chauffer la feuille de matière plastique (1', 2') et/ou la charge, des moyens (7, 7') pour presser la charge dans la feuille de matière plastique, des moyens (15) pour refroidir la feuille (13) munie de la charge et des moyens pour transporter la feuille plastique munie de la charge vers un dispositif de granulation également présent (16).

12. Dispositif selon la revendication 11, caractérisé en ce que les moyens pour presser la charge dans la matière plastique se composent d'un fond dur de pression avec un rouleau de pression ou de deux rouleaux de pression (7, 7') qui tournent dans des directions opposées l'une par rapport à l'autre.

13. Dispositif selon la revendication 12, caractérisé en ce que les surfaces des rouleaux de pression (7, 7') sont profilées.